# EUROPÄISCHE PATENTSCHRIFT

(11) **EP 0 694 579 B1**
(45) Veröffentlichungstag und Bekanntmachung des Hinweises auf die Patenterteilung: **01.09.1999**
(21) Anmeldenummer: 95109605.6
(22) Anmeldetag: 21.06.1995
(51) Int. Cl.: C08L 63/00, C08J 3/03, C08G 59/06

(54) **Stabile, wässrige Epoxidharz-Dispersion, Verfahren zu deren Herstellung und deren Verwendung**
Stable, aqueous epoxy resin dispersion, method for its preparation and its use
Dispersion aqueuse stable de résine époxyde, procédé pour sa préparation et utilisation

(30) Priorität: 30.06.1994 DE 4422869; 10.10.1994 DE 4436094
(43) Veröffentlichungstag der Anmeldung: 31.01.1996
(73) Patentinhaber: HOECHST AKTIENGESELLSCHAFT, 65926 Frankfurt am Main (DE)
(72) Erfinder: Pfeil, Armin, Dr., D-86916 Kaufering (DE); Neumann, Uwe, Dr., D-65307 Bad Schwalbach (DE); Hönel, Michael, Dr., D-65189 Wiesbaden (DE)
(74) Vertreter: Zounek, Nikolai, Dipl.-Ing.

(56) Entgegenhaltungen:
- EP-A- 0 639 593
- US-A- 4 315 044
- US-A- 4 847 337
- US-A- 5 300 618

## Beschreibung

Es ist bekannt, stabile, wäßrige Dispersionen von Kunstharzen dadurch herzustellen, daß man entsprechende Monomere oder Oligomere unter Verwendung geeigneter Dispergiermittel (Emulgatoren, Tenside) in einem wäßrigen Medium emulgiert und anschließend eine Polyreaktion durchführt. Auf diese Weise lassen sich zum Beispiel wäßrige Dispersionen von Acrylatharzen durch Emulsionspolymerisation darstellen. Bei Polykondensaten wie Epoxidharzen, die durch Emulsionskondensation schwierig oder gar nicht herstellbar sind, muß man wäßrige Dispersionen jedoch dadurch herstellen, daß man das Harz in Wasser dispergiert. Solche sogenannten Sekundärdispersionen sind im allgemeinen recht instabil, setzen schon innerhalb kurzer Zeit ab und zeigen meist auch schlechte filmbildende Eigenschaften.

Nach der EP-B 0 081 163 werden Polyalkylenglykol-Derivate als nichtionische Dispergiermittel für stabile, wäßrige Epoxidharz-Dispersionen eingesetzt, wobei durchschnittliche Teilchengrößen von unter 1 µm erreicht werden können. Die mit diesen Dispersionen erhältlichen Überzüge befriedigen jedoch in einer Reihe von Eigenschaften nicht.

In der EP-A 0 051 483 werden Epoxidharz-Dispersionen aus selbstemulgierenden Epoxidharzen beschrieben, die Polyalkylenglykol-Glydicyläther und gegebenenfalls noch ein Monoepoxid als reaktiven Verdünner enthalten. Als maximale Teilchengröße werden ca. 3 µm angegeben. Filme, die aus diesen Dispersionen und geeigneten Härtungsmitteln hergestellt werden, weisen durch den Gehalt an den relativ reaktionsträgen Polyalkylenglykol-Glycidyläthern und gegebenenfalls Monoepoxiden, die als Kettenabbrecher wirken, eine verhältnismäßig weiche Oberfläche auf, die die Verwendbarkeit der beschriebenen Epoxid-Dispersionen einschränkt.

In der US-A 4,423,201 wird die Herstellung selbstemulgierender Epoxidharze beschrieben aus Diglycidyläthern aromatischer Polyole, aromatischen Polyolen und Umsetzungsprodukten von langkettigen, aliphatischen Polyätherglykolen mit Diisocyanaten und aromatischen Polyolen. Die Dispergierung dieser Harze in Wasser ist jedoch nur unter Zuhilfenahme größerer Mengen organischer Lösungsmittel möglich, auch sind die erzielten Teilchengrößen verhältnismäßig hoch. Die mit diesen Epoxidharz-Dispersionen gefertigten Beschichtungen sind zudem relativ weich.

In der Patentanmeldung DE-A 41 28 487 wird ein Verfahren beschrieben zur Herstellung von wäßrigen Epoxidharz-Dispersionen, welche als Epoxidharz ein Kondensationsprodukt aromatischer und aliphatischer Polyglycidylverbindungen mit aromatischen Polyolen, und als Dispergiermittel ein Kondensationsprodukt aus aliphatischen Polyolen mit Epoxidverbindungen enthalten. Diese Dispersionen zeigen hervorragende Scher- und Lagerstabilität und eignen sich vorzüglich für kalthärtende Beschichtungen, speziell für den Korrosionschutz und Lackanwendungen.

In der Patentanmeldung DE-A 43 09 639 werden analog aufgebaute Systeme beschrieben für die Verwendung in heißhärtenden Beschichtungssystemen, speziell für die Konservendoseninnenbeschichtung.

Als Weiterentwicklung der beiden letztgenannten Anmeldungen ist die Herstellung absolut lösemittelfreier Epoxidharzdispersionen nach dem sogenannten Monomerverfahren zu sehen. In der Patentanmeldung DE-A 43 27 493 werden das Verfahren und die Herstellung solcher Dispersicnen beschrieben, welche als Epoxid-Additionspolymer-Hybriddispersionen vorliegen und gegenüber den Rein-Epoxidharz-Dispersionen weitere technische Vorteile aufweisen, wie Lösemittelfreiheit, höhere Beständigkeit der Beschichtungen und breitere Variationsmöglichkeit durch Wahl der Monomeren.

Nachdem es sich bei dem Feststoff dieser Dispersionen um in situ erzeugte physikalische Mischungen von Epoxidharz und Polymer handelt und die Auswahl und vor allem die Menge der Monomeren durch die Verträglichkeit des entsprechenden Polymers mit dem Epoxidharz eingeschränkt wird, sollte nach einem Weg gesucht werden, die Verträglichkeit zwischen Epoxid-Komponente und Polymer-Komponente zu verbessern. Eine besonders gute Verbindung beider Komponenten in der Beschichtung ergibt sich mit den zuvor genannten Dispersionen dann, wenn durch geeignete Wahl der funktionellen Gruppen des Polymers eine Mitvernetzung bei der Härtungsreaktion stattfinden kann. Durch geeignete Modifikation des Epoxidharzes könnte jedoch bereits die Verträglichkeit mit dem Additionspolymer vor und unabhängig von der Härtungsreaktion verbessert werden. Dadurch kann der Gehalt an preisgünstiger Polymer-Komponente deutlich erhöht werden.

Es bestand daher die Aufgabe, die Epoxidharzkomponente so zu modifizieren, daß deren Verträglichkeit mit Additionspolymeren aus Vinylmonomeren erheblich verbessert wird.

Dies wurde in der vorliegenden Erfindung erreicht, die eine stabile, wäßrige Epoxidharz-Dispersion betrifft, enthaltend
(A) ein Epoxidharz, hergestellt durch Kondensation
   (A1) einer Epoxidverbindung mit durchschnittlich mindestens zwei Epoxidgruppen pro Molekül und einem Epoxidäquivalentgewicht von 100 bis 2000 g/mol, oder bevorzugt einer Mischung mehrerer solcher Verbindungen mit
   (A2) einem modifizierten Polyphenol, gewonnen durch Umsetzung von
      (A2a) aromatischen Polyolen (Polyhydroxyaromaten) mit
      (A2b) Vinylverbindungen,
(B) ein Dispergiermittel, enthaltend
   (B1) ein Kondensationsprodukt aus
      (B1a) einem Polyol vorzugsweise mit einer gewichtsmittleren Molmasse (Mw) von 200 bis 20000 g/mol und
      (B1b) einer Epoxidverbindung mit durchschnittlich mindestens zwei Epoxidgruppen pro Molekül und bevorzugt einem Epoxidäquivalentgewicht von 100 bis 2000 g/mol, und
   (B2) gegebenenfalls weiteren, vorzugsweise nichtionischen Tensiden;
(C) gegebenenfalls ein Verdünnungsmittel, ausgewählt aus
   (C1) zur radikalischen Polymerisation bzw. Copolymerisation befähigten olefinisch ungesättigten, ansonsten inerten oder gegebenenfalls funktionellen Monomeren, und
   (C2) niedermolekularen, flüssigen epoxyfunktionellen Verbindungen (sog. Reaktiwerdünnern), und
   (C3) organischen Lösemitteln;
(D) Wasser;
(E) gegebenenfalls übliche Zusatzstoffe, Härter und/oder härtbare Harze.

Unter Epoxidäquivalentgewicht wird die molare Masse verstanden, dividiert durch die Anzahl der Epoxidgruppen pro Molekül. Stabil bedeutet in diesem Zusammenhang, daß beim Lagern bei 20 °C innerhalb von wenigstens 3 Wochen keine Sedimentation zu beobachten ist.

Das Gewichtsverhältnis von modifiziertem Epoxidharz (A) zu Monomeren (C1) liegt von 99,5 : 0,5 bis 20 : 80, bevorzugterweise zwischen 5 : 95 und 50 : 50. Dabei enthalten die Monomeren (C1) gegebenenfalls Monomere, deren funktionelle Gruppen mit dem beabsichtigten Härtungsmittel oder bei erhöhter Temperatur mit den Epoxidgruppen reagieren können, bevorzugt in einer Menge von 2,5 bis 25 % bezogen auf die Masse von (C1). Der Anteil an niedermolekularen Epoxidverbindungen (C2) kann bis zu 25 % bezogen auf die Summe der Massen der Komponenten (A) und (C1) betragen. Der Gehalt an Dispergiermittel (B) bezieht sich auf die Summe der Massen sämtlicher nicht wasserlöslicher Bestandteile der Dispersion, d.h. auf das Epoxidharz (A), die Monomeren (C1) und gegebenenfalls Reaktiwerdünner (C2) und liegt zwischen 1 und 25 %, bevorzugt zwischen 2 und 15 %. Das Massenverhältnis der Komponenten des Dispergiermittels liegt für (B1) : (B2) zwischen 0 : 100 und 100 : 0, bevorzugt über 75 : 25. Der Festkörpermassengehalt der erfindungsgemäßen Dispersion liegt zwischen 30 und 90 %, bevorzugt aber von 55 bis 75 %, wobei die Dispersion bis 10 % Lösemittel (C3) bezogen auf die Masse der Dispersion in der Lieferform enthalten kann, bevorzugt aber lösemittelfrei ist.

Die Erfindung betrifft weiterhin ein Verfahren zur Herstellung modifizierter Epoxidharz-Dispersionen, dadurch gekennzeichnet, daß gegebenenfalls zuerst die modifizierten Polyphenole (A2) wie zuvor beschrieben synthetisiert werden, dann das Epoxidharz (A) durch Kondensation der zwei Komponenten (A1) und (A2) bei erhöhten Temperaturen in Gegenwart eines Kondensationskatalysators hergestellt wird, wobei, falls zwei oder mehrere Epoxidverbindungen (A1) verwendet werden, die Kondensationsreaktion vorzugsweise in zwei Stufen durchgeführt wird, anschließend das Dispergiermittel (B) und gegebenenfalls Verdünnungsmittel (C) zugegeben werden, um danach zu der so erhaltenen Mischung bei 30 bis 100 °C entsprechende Mengen Wasser (D) zuzugeben. Falls als Verdünnungsmittel auch Monomere gemäß (C1) verwendet wurden, folgt in der fertigen, möglicherweise aber noch nicht vollständig mit der Gesamtmenge Wasser (D) verdünnten Dispersion eine Emulsionspolymerisation zur Erzeugung des Additionspolymeren. Anschließend kann gegebenenfalls die Zugabe weiterer Komponenten gemäß (E) erfolgen.

Ferner ist es aber auch denkbar, die unter (A2a) genannten (Poly)Phenole mit einem stöchiometrischen Unterschuß an Epoxidverbindungen gemäß (A1) umzusetzen, dann erst diese höhermolekularen Produkte mit Vinylverbindungen (A2b) zu modifizieren, um schließlich mit einem stöchiometrischen Überschuß an Epoxidverbindungen (A1) das modifizierte Epoxidharz (A) herzustellen.

Schließlich hat die Erfindung auch noch die Verwendung dieser Epoxidharz-Dispersionen zur Herstellung von Anstrichmaterialien, Beschichtungsmassen, Formmassen, Klebstoffen und härtbaren Massen zum Gegenstand. Das Epoxidharz (A) der erfindungsgemäßen Dispersionen besitzt vorzugsweise ein Epoxidäquivalentgewicht von 350 bis 4000, insbesondere von 400 bis 2000 g/mol. Die mittlere Teilchengröße des dispergierten Harzes ist in der Regel nicht höher als 1,0 µm und beträgt vorzugsweise 0,2 bis 0,8 µm. Der Massenanteil dieses Harzes in der Dispersion beträgt im allgemeinen etwa 20 bis 75 %, vorzugsweise etwa 25 bis 65 %.

Bei den 1,2-Epoxidverbindungen (A1) und (B1) handelt es sich um Polyepoxide mit im Mittel mindestens zwei Epoxidgruppen pro Molekül. Diese Epoxidverbindungen können dabei sowohl gesättigt als auch ungesättigt sowie aliphatisch, cycloaliphatisch, aromatisch und/oder heterocyclisch sein und auch Hydroxylgruppen aufweisen. Sie können weiterhin solche Substituenten und/oder funktionelle Gruppen enthalten, die unter den Mischungs- oder Reaktionsbedingungen keine störenden Nebenreaktionen verursachen, beispielsweise Alkyl- oder Arylsubstituenten, Äthergruppierungen und ähnliche.

Vorzugsweise handelt es sich bei diesen Epoxidverbindungen um Polyglycidyläther auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen mit Aldehyden, insbesondere Formaldehyd in Gegenwart saurer Katalysatoren). Die Epoxidäquivalentgewichte dieser Epoxidverbindungen liegen vorzugsweise zwischen 90 und 500, insbesondere zwischen 100 und 350 g/mol.

Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), 4,4'-Dihydroxydiphenylcyclohexan, 4,4'-Dihydroxy-3,3'-dimethyldiphenylpropan, 4,4'-Dihydroxydiphenyl, 4,4'-Dihydroxybenzophenon, 1,1-Bis-(4-hydroxyphenyl)-äthan, 2,2-Bis[4-(2-Hydroxypropoxy)phenyl]-propan, 1,1-Bis-(4-hydroxyphenyl)-isobutan, 2,2-Bis-(4-hydroxy-3-tert.-butylphenyl)-propan, Bis-(2-hydroxynaphthyl)-methan, 1,5-Dihydroxynaphthalin, Tris-(4-hydroxyphenyl)-methan, Bis-(4-hydroxyphenyl-)äther, Bis-(4-hydroxyphenyl-)sulfon u. a. sowie die Halogenierungs- und Hydrierungsprodukte der vorstehend genannten Verbindungen. Bisphenol A ist hierbei besonders bevorzugt.

Als Beispiele für mehrwertige Alkohole seien Äthylenglykol, Diäthylenglykol, Triäthylenglykol, Polyäthylenglykole (Polymerisationsgrad n = 1 bis 35), 1,2-Propylenglykol, Polypropylenglykole (n = 1 bis 15), 1,3-Propylenglykol, 1,4-Butandiol, 1,5-Pentandiol, 1,6-Hexandiol, 1,2,6-Hexantriol, Glycerin, Neopentanglykol, Trimethyloläthan und Trimethylolpropan genannt. Polypropylenglykole (Polymerisationsgrad n = 8 bis 10) sind hierbei besonders bevorzugt.

Es können auch Polyglycidylester von Polycarbonsäuren verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind Adipinsäurediglycidylester, Phthalsäurediglycidylester und Hexahydrophthalsäurediglycidylester.

Eine ausführliche Aufzählung geeigneter Epoxidverbindungen findet sich in dem Handbuch "Epoxidverbindungen und Epoxidharze" von A. M. Paquin, Springer Verlag, Berlin 1958, Kapitel IV und in Lee, Neville, "Handbook of Epoxy Resins", Mc Graw-Hill Book Co., 1967, Chapter 2. Die genannten Epoxidverbindungen können einzeln oder im Gemisch eingesetzt werden.

Als mehrwertige (Poly)Phenole (A2a) seien beispielsweise folgende Verbindungen genannt: Phloroglucin, Pyrogallol, Hydroxyhydrochinon, 1,4-Dihydroxynaphthalin und dessen Stellungsisomere, wie zum Beispiel: 1,2-; 1,3-; 1,5-; 1,6-Dihydroxynaphthalin, 2,2'-Dihydroxybiphenyl und dessen Stellungsisomere, zum Beispiel 4,4'- und 2,5-Dihydroxybiphenyl, 3,3'-Dihydroxy-2,2'-bipyridyl, Hydrochinon, Resorcin, Dihydroxyanthrachinon (z. B. Chinizarin, Anthraflavinsäure), Brenzkatechin, Bis-(2-Hydroxyphenyl-)methan, Bis-(4-hydroxyphenyl-)methan, 2,2-Bis-(2-hydroxyphenyl-)propan, 2,2-Bis-(4-hydroxyphenyl-)propan (Bisphenol A), 4,4-bis-(4-hydroxyphenyl)valeriansäure und deren Amid, Bis-(4-hydroxyphenyl)-sulfon, Bis-(4-hydroxyphenyl-)sulfid, 2,2-Bis(4-hydroxyphenyl)-essigsäure und deren Amid. Es können auch sämtliche für die Epoxidverbindung (A1) genannten Verbindungen in Betracht kommen. Die genannten (Poly)Phenole können einzeln oder im Gemisch eingesetzt werden. Besonders bevorzugt sind Bisphenol A, Bisphenol F und Resorcin, Phenol und o- oder p-Alkylphenol (Alkyl = C₁-C₁₈). Unter den Vinylverbindungen (A2b) werden Styrol, α-Methylstyrol, ortho-, meta- und para-Methylstyrol, ortho-, meta- und para-Äthylstyrol und kernsubstituierte Mono-, Di- und Trihalogenstyrole wie p-Bromstyrol, p-Chlorstyrol, 2,4-Dibromstyrol, 2,4-Dichlorstyrol, 2,4,6-Trichlorstyrol verstanden, weiter Vinylester (z.B. der ®Versaticsäure(n): ®Veova 10, ®Veova 9, ®Veova 5, der Fa. Shell; Vinylacetat, Vinylpropionat, Vinyl-2-äthylhexanoat) und Vinyläther (z.B. von Methanol, Äthanol, Propanol, iso-Butanol, Octadecanol, tert.-Butanol, Cyclohexanol, sowie die Mono- und Divinyläther von Äthylenglykol, Propandiol-1,2 und -1,3, Butandiol-1,4, Hexandiol-1,6, Tetraäthylenglykol, ®Pluriol-E-200, Polytetrahydrofurandiol, 2-Diäthylaminoäthanol und Aminopropanol, wobei die Aminogruppe gegebenenfalls als Ketimin blockiert vorliegen kann).

Als weitere Vinylverbindungen kommen in Betracht: Acryl- oder Methacrylsäureester von 1 bis 18 Kohlenstoffatome enthaltenden Monoalkoholen, wie z. B. t- oder n-Butylmethacrylat, Methylmethacrylat, Isobutylacrylat, 2-Äthylhexylacrylat, t- oder n- Butylacrylat, Hydroxy-C₂₋₄-alkylacrylate, Hydroxyäthyl(meth)acrylat und/oder Hydroxypropyl(meth)acrylat und weitere, unter (C1) weiter unten genannte Verbindungen.

Des weiteren können auch Umsetzungsprodukte von (mono-)hydroxy-funktionellen Vinyläthern oder Estern oder (Meth-) Acrylaten (s.o.) mit Diisocyanaten (vgl. EP-A 0 296 507) zum Einsatz kommen und derart Urethan-modifizierte (Bis)-Phenole eingesetzt werden.

Besonders bevorzugt sind Umsetzungsprodukte aus (Poly)Phenol und Vinyl-Verbindung, die im statistischen Mittel 1,5 bis 3 phenolische OH-Gruppen pro Molekül enthalten.

Bei den Polyolen (B1a) handelt es sich vorzugsweise um Polyätherpolyole (Polyoxyalkylenglykole) mit gewichtsmittleren Molmassen (Mw; Gelpermeationschromatographie; Polystyrolstandard) von bevorzugt zwischen 600 und 12000, insbesondere 2000 bis 8000 g/mol und OH-Zahlen zweckmäßigerweise von 10 bis 600, bevorzugt 15 bis 120 mg KOH / g. Diese Polyätherpolyole besitzen vorzugsweise nur endständige, primäre OH-Gruppen. Beispielsweise seien hier Blockcopolymere aus Äthylenoxid und Propylenoxid sowie Polyäthylen-, Polypropylen-, Polybutylenglykole genannt, wobei auch Gemische der jeweiligen Polyalkylenglykole eingesetzt werden können. Vorzugsweise werden Polyäthylenglykole verwendet.
Als Epoxidverbindungen (B1b) kommen sämtliche unter (A1) genannten Verbindungen in Frage.

Vorzugsweise wird das Dispergiermittel (B1) durch Kondensation der genannten Polyätherpolyole (B1a) mit den Polyglycidyläthern (B1b) in Gegenwart geeigneter Katalysatoren bei 50 bis 200 °C, vorzugsweise bei 90 bis 170 °C, hergestellt, wobei das Verhältnis der Zahl der OH-Gruppen zu der der Epoxidgruppen 1 : 0,8 bis 1 : 1,5, vorzugsweise 1 : 0,95 bis 1 : 1,25 und das Epoxidäquivalentgewicht des Kondensationsproduktes mindestens 5000 g/mol, vorzugsweise 100 000 g/mol bis 400 000 g/mol beträgt. Auf diese Art und Weise können z.B. hydrophobe Epoxidverbindungen (z.B. Polyäthylenglykoldiglycidyläther) mit hydrophoben Polyolen (z.B. Bisphenol A) oder vorzugsweise umgekehrt hydrophobe Epoxidverbindungen (z.B. Bisphenol A-Diglycidyläther) mit hydrophilen Polyolen (z.B. Polyäthylenglykol) umgesetzt werden. Derartige Produkte sind in DE-C 36 43 751 und DE-A 41 28 487 beschrieben.

Als Katalysatoren für diese Kondensationsreaktion eignen sich starke anorganische und organische Basen, wie zum Beispiel Natriumhydroxid, Kaliumhydroxid, Lithiumhydroxid, Bariumhydroxid, Strontiumhydroxid, Alkalialkoholate wie Natriummethylat, Lithiummethylat, Natriumäthylat und Kaliumdodecylat sowie die Alkalisalze von Carbonsäuren, wie zum Beispiel Natrium- und Lithiumstearat. Ebenfalls geeignet sind starke anorganische und organische Brönstedsäuren, zum Beispiel Phosphorsäure, Tetrafluorborsäure und Toluol- bzw. Benzolsulfonsäure. Ferner können als Katalysatoren Lewis-Säuren verwendet werden. Als Beispiele seien Zinntetrachlorid, Titantetrachlorid, Titantetraisopropylat, Triäthyloxoniumtetrafluoroborat sowie Bortrifluorid und seine Komplexe, zum Beispiel mit Phosphorsäure, Essigsäure (1 : 1 und 1 : 2), Methanol, Diäthyläther, Tetrahydrofuran, Phenol, Äthylenglykolmonoäthyläther, Polyäthylenglykol (z.B der Molmasse 200 g/mol), Dimethylsulfoxyd, Di-n-Butyläther, Di-n-Hexyläther, Bernsteinsäure und aliphatischen, cycloaliphatischen, araliphatischen Aminen sowie StickstoffHeterocyclen.

Bevorzugt werden als Katalysatoren BF₃-Diäthylätherat, BF₃-Essigsäure-Addukt und wäßrige Tetrafluorborsäure eingesetzt. Die Menge an Katalysator beträgt im allgemeinen 0,1 bis 5, vorzugsweise 0,1 bis 1 %, bezogen auf die Masse des Reaktionsgemischs. Zur besseren Dosierung kann der Katalysator in einem Lösungsmittel wie Diäthyläther, einem Glykol- oder cyclischen Äther, Ketonen und dergleichen verdünnt werden.

Zur Herstellung des Kondensationsproduktes erwärmt man die umzusetzenden Gemische aus Hydroxylgruppen und Epoxidgruppen enthaltenden Verbindungen bis zu der Temperatur, bei der die Kondensation mit ausreichender Geschwindigkeit d. h. in 30 min bis 5 Stunden, abläuft. Die Umsetzung verfolgt man zweckmäßig über die Zunahme des Epoxidäquivalentgewichts, das eine Verminderung der Epoxidgruppen anzeigt. Die Reaktion kann durch Kühlung unter die Reaktionstemperatur abgebrochen werden.

Das so gewonnene Kondensationsprodukt (B1) kann als solches (100%ig) als Dispergiermittel (B) zur Herstellung der erfindungsgemäßen Dispersionen verwendet werden. Vorzugsweise wird jedoch aus Gründen der besseren Handhabbarkeit eine Mischung von 20 bis 99, vorzugsweise 40 bis 60 % des Kondensationsproduktes (B1) und einem wäßrigen Medium, bestehend aus (bezogen auf die gesamte Mischung) bis zu 50, vorzugsweise bis zu 30 %, eines organischen Lösungsmittels (C3) und 1 bis 80 %, vorzugsweise 15 bis 60 %, Wasser (D) hergestellt und diese Mischung als Dispergiermittel verwendet. Als organische Lösungsmittel entsprechend der Komponente (C3) kommen insbesondere Glykole, Mono- und Diäther- und -ester von Glykolen mit Alkoholen und Säuren, aliphatische Alkohole mit gegebenenfalls verzweigten Alkylresten von 1 bis 12 Kohlenstoffatomen, cycloaliphatische und araliphatische Alkohole sowie Ester und Ketone in Betracht, wobei diese Lösungsmittel einzeln oder im Gemisch eingesetzt werden können. Als Beispiele seien genannt: Äthylenglykol, Äthylenglykolmonomethyläther, Äthylenglykoldimethyläther, Butylglykol, Methoxypropanol, Äthoxypropanol, Äthanol, 1- und 2-Propanol, Butanol, Cyclohexanol, Benzylalkohol, Essigsäureäthylester, Aceton sowie Methylisobutylketon. Bevorzugt werden Butylglykol, Methoxypropanol, Äthoxypropanol, 2-Propanol und/oder Benzylalkohol eingesetzt.

Zusätzlich können zum Dispergiermittel (B1) auch weitere Dispergiermittel (B2) anionischer, kationischer und vorzugsweise nichtionischer Art verwendet werden. In Frage kommen Alkylbenzolsulfonate, primäre und sekundäre Alkansulfonate, α-Olefinsulfonate, Alkylsulfate und Alkyläthersulfate als anionische sowie quaternäre Ammoniumverbindungen als kationische Tenside, wobei die ionischen Gruppen nicht mit den Epoxidgruppen wechselwirken dürfen. Bevorzugt ist aber die Verwendung nichtionischer Tenside wie äthoxylierter oder äth/propoxylierter Alkohole, Oxoalkohole, Alkylphenole (z.B. Arcopal® der Firma Hoechst), Rizinusöle, Ester, Glycerinstearate, Fettsäuren, Fettamine, Fettalkohole, aber auch z.B. Äthylenoxid-Propylenoxid-Blockcopolymere (z.B. Pluronic® der Firma BASF). Auch die speziell zur Dispergierung von Epoxidharzen beschriebenen Emulgatoren können zum Einsatz kommen, wie z.B. aus US-A 4,423,201 und US-A 4,446,256 (Produkte aus Polyalkylenglykolen, Diisocyanaten und Bisphenolen), EP-A 0 497 404 (Produkte aus Alkoxypolyalkylenglykolen, Anhydriden und Alkylenoxiden, Epoxyalkoholen oder Diglycidyläthern), WO 91/10695 (Produkte aus Polyglycidyläthern, bifunktionellen Verbindungen und Alkoxypolyalkylenglykolen), EP-A 0 109 173 (Produkte aus Polyoxyalkylenpolyaminen und Epoxidharzen) und DE-A 41 36 943 (Produkte aus Polyalkylenglykolen mit Diisocyanaten und Polyepoxiden).

Das optional einzusetzende Verdünnungsmittel (C) kann sich zusammensetzen aus zur Polymerisation befähigten Monomeren (C1), niedermolekularen, flüssigen Epoxidverbindungen - sogenannten Reaktiwerdünnern - (C2) und organischen Lösemitteln (C3).

Als Monomere (C1) kommen sämtliche äthylenisch ungesättigten Verbindungen in Frage, welche zur radikalischen Polymerisation in Emulsion befähigt sind und nicht unerwünscht bei Raumtemperatur mit der vorliegenden Epoxidharzdispersion wechselwirken. Dazu zählen Acryl-, Methacryl- und höhere Alkylacrylsäuren, sowie deren Alkylester (C1- bis C18-Alkyl(meth)acrylate, z.B. Methylacrylat und-methacrylat, Äthylacrylat und -methacrylat, n- und iso-Propylacrylat und -methacrylat, n-, iso- und tert-Butylacrylat, n- und tert-Butylmethacrylat, 2-Äthylhexylacrylat und -methacrylat, 4-tert-Butylcyclohexylacrylat, Isobornylacrylat und -methacrylat) und Derivate (z.B. Acrylnitril), aber auch Vinylderivate (z.B. Styrol, α-Methylstyrol, Vinyltoluole, Vinylacetat, Vinylchlorid, Vinylidenchlorid, N-Vinylpyrrolidon) und α,β-ungesättigte Carbonsäuren wie Maleinsäure, Fumarsäure, Itaconsäure sowie deren Derivate, aber auch Alkene wie Isopren und Butadien. Die Monomere können auch funktionelle Gruppen enthalten, welche bei der später anzustrebenden Härtungsreaktion teilnehmen, so eignen sich hier z.B. speziell glycidyl- und hydroxylfunktionelle Monomere (z.B. Glycidylmethacrylat, 2-Hydroxybutylacrylat, 4-Hydroxybutylacrylat, 2-Hydroxyäthylacrylat, 2-Hydroxyäthylmethacrylat, 2-Hydroxypropylacrylat, Hydroxypropylmethacrylat usw.), aber auch amidofunktionelle Verbindungen (z.B. Acrylamid) oder N-Methylol-Monomere (z.B. N-Methylolacrylamid). Schließlich können auch mehrfachfunktionelle Monomere, sei es bezüglich der Polymerisation oder der Härtung, zugegen sein, so z.B. 1,6-Hexandioldiacrylat und Divinylbenzol.

Die aufgeführten Monomere werden als gesamte Menge auf einmal vor dem Dispergieren zugesetzt und dienen so als Viskositätssenker und erleichtern die Dispergierung, oder sie können bei einem höheren Polymeranteil zum Teil während des Dispergiervorgangs zugegen sein, und der Rest wird kontinuierlich während der Emulsionspolymerisation zudosiert. Auf diese Weise lassen sich gezielt core-shell-Partikel erzeugen. Die Anwesenheit der Monomeren während der Dispergierung hat den Vorteil, daß das Viskositätsmaximum bei der Phasen-inversion W/O → O/W (Wasser-in-Öl zu Öl-in-Wasser) nicht durch inerte, in der fertigen Dispersion verbleibende Lösemittel abgesenkt werden muß, wie es in EP-A 0 272 595 beschrieben wurde. Somit gelingt die Formulierung völlig lösemittelfreier Dispersionen - eine weitere erhebliche Verbesserung gegenüber dem Stand der Technik. Ein zu hoher Monomerengehalt während des Dispergiervorganges würde aber die Viskosität zu weit senken, die einzutragende Scherkraft für die Zerteilungsvorgänge könnte nicht mehr aufgebaut werden. Darum ist gegebenenfalls die Aufteilung der Monomerenmenge in mehrere zweckmäßige Teilmengen nötig.

Soll eine Mitvernetzung des Polymers bei der Härtungsreaktion erreicht werden, so sind funktionelle Co-Monomere einzusetzen. Für kalthärtende Systeme (Aminhärter) sind glycidylgruppenhaltige Monomere (z.B. Glycidylmethacrylat) bevorzugt, für heißhärtende Systeme säuregruppenhaltige Monomere (wie z.B. Methacrylsäure, reagiert beim Einbrennen mit den Epoxidgruppen von (A) und (C2)) oder OH-funktionelle Monomere (wie z.B. Hydroxyäthylmethacrylat, reagiert beim Einbrennen mit Methylol- oder Säuregruppen des Härters).

Als niedermolekulare flüssige epoxyfunktionelle Verbindungen (C2) sind zu nennen Mono- und Diglycidyläther, welche u.a. unter dem Begriff Reaktiwerdünner bekannt sind, z.B. para-tert.-Butylphenylglycidyläther, n-Butylglycidyläther, Phenylglycidyläther, ortho-Kresylglycidyläther, Butandioldiglycidyläther, Hexandioldiglycidyläther, Neopentylglykoldiglycidyläther, Dimethylolcyclohexandiglycidyläther, 2-Äthylhexylglycidyläther, höhere Alkylglycidyläther usw. (z.B. die Reaktiwerdünner der Serie Grilonit® RV der Firma Ems, Epodil® der Firma Anchor oder Eurepox® RV der Firma Schering), ®Versaticsäureglycidylester (Cardura® E 10 der Firma Shell), flüssige Polyoxyalkylendiglycidyläther (z.B. Beckopox® EP 075 der Firma Hoechst), aber auch flüssige Epoxidharze wie z.B. Bisphenol A- und F-diglycidyläther. Die Komponente (C-2) wird im folgenden aus Gründen der Einfachheit Reaktiwerdünner genannt. Bevorzugte Reaktiwerdünner sind Hexandioldiglycidyläther und para-tert.-Butylphenylglycidyläther.

Als organische Lösungsmittel (C3) kommen außer den oben genannten Lösungsmittel für (B) auch Aromaten wie Toluol oder Xylol in Frage. Die Lösungsmittel können einzeln oder im Gemisch eingesetzt werden. Bevorzugte Lösungsmittel sind wiederum Butylglykol, Methoxypropanol, Äthoxypropanol, 2-Propanol und/oder Benzylalkohol.

Als übliche Zusatzstoffe im Sinne von (E), die eventuell in den erfindungsgemäßen Kombinationen vorhanden sein können, seien hier beispielsweise die üblichen Lackadditive wie Pigmente, Pigmentpasten, Antioxidantien, Verlaufs- bzw. Verdickungsmittel, Entschäumer und/oder Netzmittel, Reaktiwerdünner, Füllstoffe, Katalysatoren, Konservierungsmittel und Schutzkolloide genannt. Diese Additive, wie auch die später beschriebenen Härter und weiteren härtbaren Harze, können der Dispersion gegebenenfalls erst unmittelbar vor der Verarbeitung zugegeben werden.

Die Erfindung betrifft weiter ein Verfahren zur Herstellung der erfindungsgemäßen Epoxidharzdispersionen. Dabei wird zunächst das Epoxidharz (A) durch Kondensation der Komponenten (A1) und (A2) bei erhöhten Temperaturen, im allgemeinen bei 100 bis 220 °C, vorzugsweise bei 150 bis 180 °C, in Gegenwart eines die Kondensation beschleunigenden Katalysators hergestellt.

Werden zwei oder mehrere Epoxidverbindungen (A1) eingesetzt, so wird die Kondensationsreaktion vorzugsweise in zwei Stufen dergestalt durchgeführt, daß in einer ersten Reaktion eine oder mehrere Komponenten (A1) mit den Komponenten gemäß (A2) in einem Mengenverhältnis umgesetzt werden, daß dieses erste Kondensationsprodukt ein Epoxid-Äquivalentgewicht von größer 5000 g/mol, vorzugsweise größer 20000 g/mol, besitzt und noch freie phenolische Gruppen aufweist, und in einer weiteren Kondensationsreaktion dieses erste Kondensationsprodukt mit weiteren Epoxidverbindungen gemäß (A1) umgesetzt wird, so daß schließlich das gewünschte Epoxidharz (A) erhalten wird.

Geeignete Kondensationskatalysatoren sind beispielsweise Phosphine, wie Triphenylphosphin, Phosphoniumsalze, wie z.B. Benzyltrimethylphosphoniumchlorid, tertiäre Amine, wie N,N-Dimethylbenzylamin, quartäre Ammoniumsalze, wie z.B. Tetramethylammoniumchlorid, Alkalihydroxide, wie Natriumhydroxid und Lithiumhydroxid, Alkalicarbonate, wie Natriumcarbonat und Lithiumcarbonat, Alkalisalze organischer Säuren, wie z.B. Natriumformiat, Lithiumbenzoat und Lithiumstearat und Lewis-Säuren, wie z.B. Bortrifluorid und seine Komplexe, Titantetrachlorid, Zinnchlorid und Triäthyloxoniumtetrafluoroborat.

Anschließend werden dem Epoxidharz (A) bei Temperaturen von 60 bis 200 °C, vorzugsweise von 70 bis 120 °C, das Dispergiermittel (B) und gegebenenfalls Verdünnungsmittel gemäß (C) zugegeben und 15 bis 180, vorzugsweise 30 bis 90 Minuten, verrührt.

Danach wird bei Temperaturen von 30 bis 100 °C, bevorzugt 50 bis 90 °C, die entsprechende Menge an Wasser (D), vorzugsweise in mehreren Teilmengen, unter kräftigem Rühren zudosiert, wodurch die wäßrige Dispersion entsteht.

Das gegebenenfalls benötigte Verdünnungsmittel (C) wird als gesamte Menge auf einmal vor dem Dispergieren zugesetzt, es dient so als Viskositätssenker und erleichtert die Dispergierung, oder es kann bei einem größeren Menge zum Teil während des Dispergiervorgangs zugegen sein, und der Rest wird nach erfolgter Dispergierung zugegeben. Dabei müssen die beiden Teilmengen bezüglich Art und Zusammensetzung der Komponenten (C1), (C2) und (C3) nicht identisch sein. Die Anwesenheit des Verdünnungsmittels (C1) und/oder (C2) während der Dispergierung hat den Sinn, daß das Viskositätsmaximum bei der Phaseninversion W/O → O/W nicht durch inerte, in der fertigen Dispersion verbleibende Lösemittel abgesenkt werden muß, wie es in DE-A 41 28 487 beschrieben wurde. Somit gelingt bei Verzicht auf Lösemittel nach (C3) die Formulierung völlig lösemittelfreier Dispersionen - eine weitere erhebliche Verbesserung gegenüber dem Stand der Technik. Ein zu hoher Gehalt während des Dispergiervorganges würde aber die Viskosität zu weit senken, die einzutragende Scherkraft für die Zerteilungsvorgänge könnte nicht mehr aufgebaut werden. Darum ist gegebenenfalls die Aufteilung der Gesamtmenge in zwei zweckmäßige Teilmengen nötig.

Der Einsatz von Reaktiwerdünner (C2) kann zudem erfolgen, um die anwendungstechnischen Eigenschaften der Dispersion zu steuern, z.B. Senkung der Mindestfilmbildungstemperatur, Verlängerung der Verarbeitungszeit, Verbesserung von Glanz, Scherstabilität und Stabilität gegenüber Gefrier-Tau-Zyklen, gezielte Beeinflussung von Härte und Elastizität usw. Der Vorteil gegenüber der Verwendung organischer Lösemittel liegt darin, daß diese Reaktiwerdünner bei der Härtungsreaktion in den Film eingebaut werden und somit nicht zur unerwünschten Emission organischer Komponenten führen, der Anspruch der Lösemittelfreiheit also gewahrt bleibt. Die Zugabe des Reaktiwerdünners vor dem Dispergierprozeß hat den wesentlichen Vorteil, daß dieser mit weniger Aufwand deutlich besser emulgiert wird als im Falle einer nachträglichen Zugabe zur fertigen Dispersion, was zu einer verbesserten Qualität der Beschichtung führt. In diesem Falle liegen Reaktiwerdünner und Basisharz wahrscheinlich in gemeinsamen Micellen vor, was durch nachträgliches Einhomogenisieren der Reaktiwerdünner nicht zu erreichen ist. Der Gehalt an Reaktiwerdünner ist zum Festkörper des Bindemittels bzw. des Lackes hinzuzurechnen.

Dem Epoxidharz (A) werden im Falle der Herstellung von Epoxid-Polyacrylat-Dispersionen bei Temperaturen von 60 bis 200 °C, vorzugsweise von 70 bis 120 °C, die Monomeren (C1) - evtl. stabilisiert mit geeigneten, dem Fachmann bekannten Inhibitoren - und ggf. Reaktivverdünner (C2) bzw. eine zweckmäßige Teilmenge, dann die Dispergiermittel (B1) und ggf. (B2), ggf. gefolgt von organischen Lösungsmittel (C3) zugegeben und 15 bis 180, vorzugsweise 30 bis 90 Minuten, verrührt. Wahlweise läßt sich nach der Zugabe der Monomeren eine Reaktion zwischen Epoxidharz und den Monomeren durchführen, wie z.B. Addition von Carboxyl- oder Amin-Monomeren an die Epoxidgruppen oder Pfropfung an aliphatische Kohlenstoffatome der Epoxidkomponenten (A) und (C2), bevor das Dispergiermittel zugegeben wird.

Danach wird bei Temperaturen von 30 bis 100 °C, bevorzugt 50 bis 90 °C, die entsprechende Menge an Wasser (D), vorzugsweise in mehreren Teilmengen, unter kräftigem Rühren zudosiert, wodurch die wäßrige Dispersion entsteht. Hierbei können gegebenenfalls geeignete Entschäumer-/Entlüfter-Additive zugesetzt werden. Die Dispergierung erfolgt zweckmäßigerweise unter Zuhilfenahme geeigneter Dispergierapparate, beispielsweise eines schnellaufenden Flügelrührers, eines Mehrimpulswendelrührers, einer Kolloidmühle, eines Homogenisators, eines Dissolvers oder eines sonstigen Schnellmischers mit einer hohen Scherkraft. Dieser Vorgang wird sehr detailliert in DE-A 41 28 487 beschrieben.

In der so erhaltenen, monomerenhaltigen und reaktiwerdünnerhaltigen Epoxidharz-Dispersion wird nun bei geeigneter Temperatur die Emulsionspolymerisation eingeleitet. Bei Redox-Initiatoren wird bevorzugt das Oxidationsmittel zusammen mit dem Verdünnungswasser einhomogenisiert, und das Reduktionsmittel kontinuierlich zudosiert - aber alle denkbaren Varianten sind ebenfalls erfindungsgemäß. Bei höherer Monomerenmenge, als für die Dispergierung benötigt; wird dabei auch die Restmenge der Monomeren (C1) zudosiert, wobei hier gezielt die Darstellung von core-shell-Acrylatpartikeln möglich ist, um die Eigenschaften der Dispersion in gewünschter Weise zu steuern. Der bevorzugte Temperaturbereich für die Emulsionspolymerisation beträgt 60 bis 90 °C, die Reaktionskontrolle erfolgt über Festkörperbestimmung oder Gaschromatographie. Eine unerwünschte Viskositätszunahme kann durch Nachdosieren von Wasser ausgeglichen werden.

Die Emulsionspolymerisation wird bei einer Temperatur eingeleitet, welche eine zügige, vollständige Reaktion gewährleistet und gleichzeitig die Dispersion nicht gefährdet. Als radikalbildende Initiatoren kommen hierfür thermisch aktivierbare Radikalbildner oder Redoxsysteme, die sämtlich dem Fachmann gut bekannt sind, in Frage. Bevorzugt können auch Gemische mehrerer Initiatoren eingesetzt werden. Thermische Initiatoren sind Peroxide, Hydroperoxide, Perester, Diazoverbindungen, z.B. Dibenzoylperoxid, Acetylperoxid, Benzoylhydroperoxid, tert-Butylhydroperoxid, Di-tert-Butylperoxid, Lauroylperoxid, Butyrylperoxid, Diisopropylbenzolhydroperoxid, Cumolhydroperoxid, Paramenthanhydroperoxid, Diacetylperoxid, Di-α-Cumylperoxid, Dipropylperoxid, Diisopropylperoxid, Isopropyl-tert-Butylperoxid, Butyl-tert-butylperoxid, Dilauroylperoxid, Difuroylperoxid, Ditriphenylmethylperoxid, Bis(p-methoxybenzoyl)peroxid, p-Monomethoxybenzoylperoxid, Rubrenperoxid, Ascaridolperoxid, tert-Butylperoxybenzoat, Diäthylperoxyterephthalat, Propylhydroperoxid, Isopropylhydroperoxid, n-Butylhydroperoxid, tert-Butylhydroperoxid, Cyclohexylhydroperoxid, trans-Decalinhydroperoxid, α-Methylbenzylhydroperoxid, *α*-Methyl-*α*-äthylbenzylhydroperoxid, Tetralinhydroperoxid, Triphenylmethylhydroperoxid, Diphenylmethylhydroperoxid, 2,5-Dimethyl-2,5-bis(2-Äthylhexanoylperoxy)-hexan, 1,1-Bis(tert-Butylperoxy)-cyclohexan und tert-Butylperbenzoat. Redox-Systeme können gewählt werden aus Oxidantien wie z.B. Wasserstoffperoxid, tert-Butylhydroperoxid, Persulfate, in Kombination mit Reduktionsmitteln wie alpha-Hydroxyketone, Ascorbinsäure, Hydrazin und Sulfite, Bisulfite, Metasulfite oder Hydrosulfite. Bevorzugt sollten Initiatoren eingesetzt werden, welche keine oder wenig ionische Verbindungen generieren, um die Wasserempfindlichkeit der später eingebrannten Filme nicht unnötig zu erhöhen. Gegebenenfalls können zur Beschleunigung die dafür bekannten Salze von Übergangsmetallen eingesetzt werden. Ein besonders bevorzugtes System ist tert-Butylhydroperoxid/Ascorbinsäure.

Die erfindungsgemäßen Epoxidharzdispersionen zeichnen sich zum einen durch ihre gute Lagerstabilität aus, die auf die für Sekundärdispersionen geringe mittlere Teilchengröße zurückzuführen ist, ferner insbesondere durch ihren sehr geringen oder fehlenden Gehalt an organischen Lösungsmitteln.

Die Viskosität dieser Dispersionen beträgt im allgemeinen zwischen 200 und 30000 mPa.s, vorzugsweise zwischen 750 und 7000 mPa.s.

Die Härter und weiteren härtbaren Harze gemäß (E) werden vorzugsweise erst unmittelbar vor der Anwendung der Dispersion zugegeben. Für die modifizierten Epoxidharze der Erfindung können die hierfür bekannten Härtungsmittel bzw. härtenden Verbindungen (Epoxidhärter) eingesetzt werden, wie basische Härtungsmittel (Aminhärter), beispielsweise Polyamine, Mannich-Basen, Addukte von Aminen an Polymeren, wie Polyepoxiden und Polyamidoaminen.

Weiterhin können saure Härtungsmittel (Säurehärter) wie Polycarbonsäuren und ihre Anhydride sowie mehrwertige Phenole Anwendung finden. Auch hydroxyl- und/oder aminogruppenhaltige Kunstharze wie Amin- oder Phenolharze sind für diesen Zweck geeignet.

Die Härtung der erfindungsgemäßen Epoxidharzdispersionen ist ferner durch sogenannte latente Härtungsmittel, d.h. Verbindungen, die erst bei höherer Temperatur, beispielsweise bei 60 bis 250 °C, ihre vernetzende Wirkung gegenüber Epoxidverbindungen entfalten, möglich. Beispiele für solche Härter sind Harnstoff, Dicyandiamid, Imidazol, Guanidin, Hydrazid und Derivate der genannten Verbindungen. Bevorzugt wird von diesen latenten Härtungsmitteln Dicyandiamid eingesetzt.

Beispiele für basische Härtungsmittel, vorzugsweise für die Härtung bei Raumtemperatur und/oder niedrigeren Temperaturen (Aminkalthärter), die allgemein im Verhältnis der Zahl der Epoxidgruppen zur Zahl der Aminwasserstoffatome von 1 zu (0,75 bis 2,0) eingesetzt werden, sind Polyalkylenamine, wie Diäthylentriamin, Triäthylentetramin, Tetraäthylenpentamin, Pentaäthylenhexamin, ferner 2,2,4- und/oder 2,4,4-Trimethylhexamethylendiamin, Bis-(3-aminopropyl)-amin, 1,4-Bis-(3-aminopropyl)-piperazin, N,N-Bis(3-aminopropyl)-äthylendiamin, Neopentandiamin, 2-Methyl-1,5-pentandiamin, 1,3-Diaminopentan, Hexamethylendiamin, sowie cycloaliphatische Amine wie 1,2- bzw. 1,3-Diaminocyclohexan, 1,4-Diamino-3,6-diäthylcyclohexan, 1,2-Diamino-4-äthylcyclohexan, 1,4-Diamino-3,6-diäthylcyclohexan, 1-Cyclohexyl-3,4-diaminocyclohexan, Isophorondiamin und Umsetzungsprodukte davon, 4,4'-Diaminodicyclohexyl-methan und -propan, 2,2-Bis(4-aminocyclohexyl)-methan und -propan, 3,3'-Dimethyl-4,4'-diaminodicyclohexylmethan, 3-Amino-1-cyclohexyl-aminopropan, 1,3- und 1,4-Bis-(aminomethyl)-cyclohexan.

Als araliphatische Amine werden insbesondere solche eingesetzt, bei denen aliphatische Aminogruppen vorhanden sind, z.B. meta- und para-Xylylendiamin oder deren Hydrierungsprodukte.
Die genannten Amine können allein oder als Gemische verwendet werden.

Geeignete Mannich-Basen werden durch Kondensation von Polyaminen, vorzugsweise Diäthylentriamin, Triäthylentetramin, Isophorondiamin, 2,2,4- bzw. 2,4,4-Trimethylhexamethylendiamin, 1,3- und 1,4-Bis-(aminomethyl)-cyclohexan, insbesondere meta- und para-Xylylendiamin mit Aldehyden, vorzugsweise Formaldehyd und ein- oder mehrwertigen Phenolen mit mindestens einer gegenüber Aldehyden reaktiven Kernposition, beispielsweise den verschiedenen Kresolen und Xylenolen, para-tert.-Butylphenol, Resorcin, 4,4'-Dihydroxydiphenylmethan, 4,4'-Dihydroxy-diphenyl-2,2-propan, vorzugsweise aber Phenol hergestellt.

Als Amin-Epoxyd-Addukte kommen beispielsweise Umsetzungsprodukte von Polyaminen, wie z.B. Äthylendiamin, Propylendiamin, Hexamethylendiamin, 2,2,4-, 2,4,4-Trimethylhexamethylendiamin, meta-Xylylendiamin und/oderBis-(aminomethyl)-cyclohexan mit endständigen Mono- oder Polyepoxiden, wie z.B. Propylenoxid, Hexenoxid, Cyclohexenoxid, oder mit Glycidyläthern wie Phenylglycidyläther, tert.-Butylglycidyläther, Äthylhexylglycidyläther, Butylglycidyläther oder mit Glycidylestern, wie dem von der Firma Shell vertriebenen Glycidylester der ®Versaticsäure, ®Cardura E, oder den unter (A1) bzw. (B1b) genannten Polyglycidyläthern und -estern in Betracht.

Polyamidoamine, die zur Härtung der erfindungsgemäßen Epoxidharzdispersionen verwendet werden können, werden beispielsweise durch Umsetzung von Polyaminen mit Mono- oder Polycarbonsäuren, z.B. dimerisierten Fettsäuren, erhalten.

Bevorzugt werden als Aminhärter neben den oben genannten Polyaminen wasserlösliche Polyoxyalkylendi- und -polyamine mit Molmassen von 100 bis 2000 g/mol, z.B. die von der Firma Texaco unter dem Warenzeichen ®Jeffamine vertriebenen Produkte, sowie die leicht in Wasser dispergierbaren Härtungsmittel, wie sie in der DE-A 23 32 177 und der EP-B 0 000 605 beschrieben sind, also z.B. modifizierte Amin-Addukte, eingesetzt.

Zur Erzielung einer schnelleren und/oder vollständigeren Durchhärtung können die aus den erfindungsgemäßen Epoxidharzdispersionen mit den genannten Aminhärtern erhältlichen Beschichtungen auch 15 bis 120 Minuten auf 50 bis 120 °C erhitzt werden.

Als saure Härtungsmittel, die im allgemeinen im Verhältnis der Zahl der Epoxidgruppen zu Zahl der Carboxylgruppen von 1 zu (0,75 bis 2) eingesetzt werden, eignen sich wasserlösliche oder wassermischbare Polycarbonsäuren. Beispiele für solche Polycarbonsäuren sind Cyclopentantetracarbonsäure, Cyclobutantetra-carbonsäure, carbonsäure, 1,2,3,4-Tetrabutancarbonsäure, Weinsäure, Malonsäure, Zitronensäure, Aconitsäure.

Ferner sind gegebenenfalls Anhydride oder saure Ester dieser Säuren mit mehrwertigen Alkoholen mit 2 bis 12, vorzugsweise 2 bis 6 C-Atomen, wie beispielsweise Neopentylglykol, Glycerin, Trimethylol-äthan oder -propan, den Alkandiolen und deren Oligomeren, die gegebenenfalls eine oder mehrere Ätherbrücken enthalten, wie Äthylenglykol, Propan- und Butandiole, geeignet, wobei die Ester stets mindestens zwei freie Carboxylgruppen aufweisen. Es ist auch möglich, saure Ester mit zwei oder mehr Carboxylgruppen von Carbonsäuren, wie beispielsweise Pyromellithsäure, Trimellithsäure, Phthalsäure, Endomethylentetra- oder hexahydrophthalsäure, Maleinsäure, Fumarsäure bzw. deren Anhydriden, sofern diese existieren, mit mehrwertigen Alkoholen, z.B. den vorstehend genannten, als Polycarbonsäurehärter zu verwenden, sofern diese sauren Ester eine ausreichende Wasserlöslichkeit bzw. Wasserverdünnbarkeit besitzen. Bevorzugt werden als saure Härtungsmittel Polycarbonsäuren eingesetzt.

Die Härtung der Epoxidharzdispersionen mit den genannten sauren Härtungsmitteln erfolgt zweckmäßigerweise bei höheren Temperaturen, z.B. bei 60 bis 220 °C, vorzugsweise bei 80 bis 200 °C, in 15 bis 150 Minuten. Zur Erzielung einer vollständigeren Durchhärtung bzw. zur Senkung der für eine ausreichende Durchhärtung erforderlichen Temperaturen können den genannten sauren Härtern noch geringe Mengen von Verbindungen beigegeben werden, die die Umsetzung Carboxylgruppe/Epoxidgruppe katalysieren. Geeignete Verbindungen sind beispielsweise starke Protonsäuren wie Phosphorsäure oder para-Toluolsulfonsäure, tertiäre Amine wie Triäthylamin, N,N-Dimethylbenzylamin, Stickstoffheterocyclen wie Imidazol, Pyridin und deren Derivate, Trialkyl- und-arylphosphine sowie entsprechende Phosphoniumverbindungen und Metallsalze bzw. -chelate wie zum Beispiel Zinn(ll)octoat.

Anstelle oder zusätzlich zu den vorstehend beschriebenen Härtern können zur Härtung auch Amin- und/oder Phenolharze Verwendung finden, die in Mengen von 5 bis 50 %, vorzugsweise 10 bis 35 %, bezogen auf den gesamte Masse des Feststoffs, eingesetzt werden. Gegebenenfalls wird die Dispersion dabei noch durch Zugabe einer zusätzlichen Wassermenge auf einen Gesamtfeststoffgehalt von 10 bis 80 % eingestellt. Beispiele für derartige Aminharze sind Aminaldehydharze, d.h. Kondensationsprodukte von Aldehyden mit Melamin (Melaminharze), Harnstoff (Harnstoffharze), Acetoguanamin (Acetoguanaminharze) oder ähnlichen Verbindungen bzw. entsprechende Präkondensate. Bevorzugte Aldehydkondensationsprodukte des Melamins sind vor allem die Alkoxymethyl-Melamin-Derivate, wobei die Alkylreste Methyl, n- oder i-Butylgruppen, bevorzugt Methylgruppen sind, wie Hexamethoxymethylmelamin, Äthoxymethoxymethylmelamin, Monomethylolpentamethoxymethylmelamin, Dimethylol-tetramethoxymethylmelamin, Trimethylol-trimethoxymethylmelamin und dergleichen mit weitgehend monomerer Struktur sowie entsprechende oligomere oder polymere Produkte.

Als Phenolharzhärter seien Resole, Formaldehyd-Phenolcarbonsäureharze und Phenolharzvorprodukte genannt, wobei die handelsüblichen verätherten, mit Wasser verdünnbaren Phenolharzresole bevorzugt sind.

Gegebenenfalls kann man den Phenol- und/oder Aminharz enthaltenden Dispersionen auch saure Katalysatoren, wie para-Toluolsulfonsäure, Cyclohexansulfaminsäure, saures Butylphosphat und Phosphorsäure - gegebenenfalls auch als (Amin)salze - zusetzen, um die Geschwindigkeit der Härtungsreaktion zu beschleunigen, so daß man Filme oder Überzüge erzeugt, die bei niedriger Temperatur oder in kürzerer Zeit aushärten. Die Menge dieser sauren Katalysatoren beträgt z.B. 2 %, bezogen auf den gesamte Feststoffmasse.

Zusätzliche härtbare Harze im Sinne der Komponente (E) sind beispielsweise in wäßrigen Medien dispergierbare Harze auf Basis von Hydroxyalkylacrylestern, Hydroxyalkyden, Polyestern, Epoxidharzen und dergleichen. Der Anteil dieser Zusätze kann beispielsweise so bemessen werden, daß der gesamte Feststoff-Massengehalt des Gemisches etwa 10 bis 80, vorzugsweise 20 bis 40 %, beträgt. Durch den Zusatz solcher Harze können die Eigenschaften der aus den Dispersionen hergestellten Produkte in mannigfaltiger Weise beeinflußt werden. So ist es z.B. möglich, durch den Zusatz von Acrylatharzen die Vergilbungsbeständigkeit zu erhöhen, während bei Anwesenheit von Alkydharzen die Elastizität der daraus hergestellten Beschichtungen deutlich verbessert wird.

Verglichen mit bereits bekannten Epoxidharzdispersionen besitzen die mit den erfindungsgemäßen Dispersionen erhältlichen Beschichtungen außerdem eine Reihe technischer Vorteile, z.B. sehr geringe Wasserempfindlichkeit, sehr gute Elastizität bei gleichzeitig verbesserter Härte, gute bis sehr gute Haftung auf den unterschiedlichsten Substraten, hervorragende Korrosionsschutzwirkung bei Beschichtung metallischer Materialien.

Aufgrund ihrer bereits angesprochenen hervorragenden technischen Eigenschaften, beispielsweise hinsichtlich Haftung, Härte, Korrosionsschutzwirkung, Wasser- und Chemikalienbeständigkeit, eignen sich die erfindungsgemäßen Dispersionen in Kombination mit geeigneten Härtungsmitteln und Zusatzstoffen zur Herstellung von Überzügen, Zwischenbeschichtungen, Anstrichmaterialien, Formmassen und härtbaren Massen für die unterschiedlichsten Anwendungsgebiete. Beispielsweise können sie zur Herstellung von Schutz- und/oder Dekorbeschichtungen auf den unterschiedlichsten, insbesondere rauhen und porösen Substraten, wie z.B. Holz, mineralischen Untergründen (z.B. Beton und Stein), Glas, Kunststoffen (z.B. Polyäthylen, Polypropylen), Kompositwerkstoffen, Keramik und vorbehandelten oder nicht vorbehandelten Metallen verwendet werden.

Durch ihre guten Eigenschaften sind die erfindungsgemäßen Dispersionen auch hervorragend für die Einschichtlackierung geeignet. Die haftende Überzugsschicht kann als solche unverändert bleiben, sie kann aber auch als Zwischenschicht, also als Unterlage für weitere Beschichtungen, dienen, die wiederum aus demselben oder einem anderen üblichen Beschichtungsmaterial bestehen können.

Wegen ihrer guten Verdünnbarkeit und ihrer günstigen Eigenschaften eignen sich die erfindungsgemäßen Dispersionen auch zur zusätzlichen Verwendung in der Elektrotauchlackierung.

Eine weitere Möglichkeit ist die Verwendung der erfindungsgemäßen Dispersionen zur Herstellung wasserverdünnbarer Klebstoffe. Auch als Bindemittel für textile, organische und/oder anorganische Materialien sind sie einsetzbar.

Ferner können sie auch als Zusatz zu Kunststoffzementen dienen.

Im Falle des Einsatzes als Beschichtungsmittel bzw. als überwiegend wäßriger Lack erfolgt die Applikation auf das Substrat nach herkömmlichen Methoden, wie beispielsweise Streichen, Spritzen, Tauchen oder Aufwalzen. Die Beschichtungen werden, sofern keine Härtungsmittel für die Kalthärtung mitverwendet werden, durch Erhitzen auf 80 bis 250 °C für eine zum Aushärten ausreichende Zeit, im allgemeinen 5 bis 60 Minuten, gehärtet.

Als wesentlicher Vorteil ist aber die deutlich verbesserte Verträglichkeit mit styrolreichen Polyacrylaten zu sehen, welche durch den Einsatz der "styrolisierten Harze" zudem in größerer Menge im Gesamtsystem enthalten sein können.

### BEISPIELE -

### 1. Herstellung modifizierter Epoxidharzdispersionen

### Synthese des erfindungsgemäß modifizierten Basisharzes

60 g eines Diglycidyläthers von Polypropylenglykol-600 (A1) werden mit 136 g eines Umsetzungsproduktes A-2 von 1 mol Bisphenol A (A2a) mit 2 mol Styrol (A2b) (OH-Äquivalentgewicht ca. 220 g / mol) in Gegenwart von 0,3 g ®Shell Katalysator 1201 (Triphenyläthylphosphonium-lodid) bei 160°C solange umgesetzt, bis das Epoxidäquivalentgewicht größer als 15.000 g / mol ist. Nach Kühlung auf 100 °C werden 254 g Diglycidyläther von Bisphenol A (A1, Epoxidäquivalentgewicht ca. 185 g / mol) und 0,1 g ®Shell Katalysator 1201 zugegeben und bei 160 °C bis zu einem Epoxidäquivalentgewicht von ca. 480 g / mol umgesetzt.

### 1.1 Erfindungsgemäße Dispersion für kalthärtende Systeme nach DE-A 41 28 487

### Modifiziertes Basisharz, lösemittelhaltig

Bei 100 °C werden zum erfindungsgemäßen Basisharz 50 g Methoxypropanol (C3) zugegeben, gefolgt von 100 g einer 50 %-igen Lösung eines Emulgators B1 in Wasser/2-Propanol (C3) (1:1), wie er in DE-A 36 43 751 beschrieben wird. Nun wird das Harz mit 310 g Wasser D nach dem Verfahren dispergiert, wie es in DE-A 41 28 487 beschrieben wird.
Man erhält eine lagerstabile Dispersion, welche folgende Kennzahlen aufweist:

| | |
|---|---|
| Viskosität (25°C, Brookfield) | 913 mPa^{·}s |
| Rückstand (1h, 1g, 125 °C) | 54,5 % |
| Epoxidäquivalentgewicht (Lff.) | 1013 g/mol |
| Teilchengröße (monomodal) | 820 nm |
| Emulgatorgehalt | 10 % auf Festkörper |
| Lösemittelgehalt | 10 % auf Festkörper |

### 1.2 Vergleichsdispersion

### nach DE-A 43 27 493

### Unmodifiziertes Basisharz, lösemittelfrei

Es wird ein Basisharz wie unter 1 hergestellt, jedoch wird die entsprechende Menge nicht styrolisiertes Bisphenol A verwendet. 385 g dieses Harzes werden mit 138 g einer 50 %-igen Lösung eines Emulgators B1 in Wasser, wie in DE-A 36 43 751 beschrieben, und 43 g Styrol C1 versetzt. Nun wird mit 320 g Wasser D nach dem Verfahren dispergiert, wie es in DE-A 41 28 487 beschrieben wird. Daraufhin wird bei 75 °C nach dem in DE-A 43 27 493 beschriebenen Verfahren polymerisiert (siehe auch Beispiel 2.2).

Man erhält eine lagerstabile Dispersion, welche folgende Kennzahlen aufweist:

| | |
|---|---|
| Viskosität (25°C, Brookfield) | 1480 mPa^{·}s |
| Rückstand (1h, 1g, 125 °C) | 56,0 % |
| Epoxidäquivalentgewicht (Lff.) | 1078 g/mol |
| Teilchengröße (monomodal) | 338 nm |
| Emulgatorgehalt | 8 % auf Festkörper |
| Lösemittelgehalt | 0 % |

### 1.3 Erfindungsgemäße Dispersion

### nach DE-A 43 27 493.5

### Modifiziertes Basisharz, lösemittelfrei

385 g des erfindungsgemäßen Basisharzes werden mit 138 g einer 50 %-igen Lösung eines Emulgators B1 in Wasser, wie in DE-A 36 43 751 beschrieben wird, und 43 g Styrol (C1) versetzt. Nun wird mit 320 g Wasser D nach dem Verfahren dispergiert, wie in DE-A 41 28 487 beschrieben. Daraufhin wird bei 75 °C nach dem in DE-A 43 27 493 beschriebenen Verfahren polymerisiert (siehe auch Beispiel 2.2).

Man erhält eine lagerstabile Dispersion, welche folgende Kennzahlen aufweist:

| | |
|---|---|
| Viskosität (25°C, Brookfield) | 1810 mPa^{·}s |
| Rückstand (1h, 1g, 125°C) | 55,8 % |
| Epoxidäquivalentgewicht (Lff.) | 1213 g/mol |
| Teilchengröße (monomodal) | 425 nm |
| Emulgatorgehalt | 8 % auf Festkörper |
| Lösemittelgehalt | 0 % |

### Anwendungstechnische Eigenschaften

Die Dispersionen 1.1 bis 1.3 werden mit einem Äquivalent des mit Wasser auf 40 % verdünnten Härters ®Beckopox EH 623w gemischt und auf entfettete Glasplatten aufgezogen, Trockenfilmdicke 25 µm. Die Härtung erfolgt bei 26 °C / 40 % rel. Luftfeuchtigkeit.

Als kommerzielles Vergleichssystem wurde die wäßrige Dispersion ®Beckopox VEP 2385w (Firma Hoechst, 56%ig in Wasser) mitgeprüft.

Der Vergleich belegt, daß die Verträglichkeit der Harzkomponenten durch den Einsatz des "styrolisierten Epoxidharzes" erheblich verbessert wird. Eine lösemittelfreie Dispersion, welche zum handelsüblichen Produkt VEP 2385w vergleichbar ist, aber eine deutlich höhere Härte aufweist, kann erzeugt werden.

Somit können in Kombination der in DE-A 43 27 493 beschriebenen Modifizierung mit der vorliegenden Erfindung lösemittelfreie Dispersionen mit deutlich verbesserter Verträglichkeit erzeugt werden:

**Tabelle:**

| **Dispersion** | **1.1** | **1.2 (Vergleich)** | **1.3** | **VEP 2385w (Vergleich)** |
|---|---|---|---|---|
| Anmerkungen | styrolisiertes Basisharz | Polyacrylat-Dispersion in Epoxidharz-Dispersion | Kombination 1.1 und 1.2 | handelsübliches Produkt |
| Viskosität | 913 mPas | 1480 mPas | 1810 mPas | 1000 mPas |
| Festkörper | 54,5 % | 56,0 % | 55,8 % | 56 % |
| Epoxidäquivalentgewicht | 1013 g/mol | 1078 g/mol | 1213 g/mol | 895 g/mol |
| Teilchengröße | 820 nm | 338 nm | 425 nm | 650 nm |
| Emulgatorgehalt | 10 % auf fest | 8 % auf fest | 8 % auf fest | 8 % auf fest |
| Lösemittelgehalt | 10 % auf fest | 0 % | 0 % | 4,5 % auf fest |
| Verarbeitungszeit | 2 h | 2 h | 2 h | 1 h 45 min |
| staubtrocken nach | 1 h 15 min | 1 h 30 min | 45 min | 30 min |
| klebfrei nach | 7 h | 8 h | 5 h 30 min | 5 h 30 min |
| Verlauf* | 0 | 0 | 0 | 0 |
| Filmtrübung* | 0 | 0 | 0 | 0 |
| Pendelhärte nach 24 h | 96 sec | 48 sec | 138 sec | 105 sec |
| Wasserfestigkeit* nach 24 h | 1 | 1-2 | 0-1 | 0-1 |

| | | | | |
|---|---|---|---|---|
| * Wertung: 0 = sehr gut bis 5 = sehr schlecht | | | | |

### 2. Dispersionen für heißhärtende Systeme

### Synthese des erfindungsgemäß modifizierten Basisharzes

898 g Diglycidyläther von Bisphenol A (A1, Epoxidäquivalentgewicht ca. 185 g / mol), 698 g eines Produktes A2 von 1 mol Bisphenol A (A2a) mit 2 mol Styrol (A2b) (OH-Äquivalentgewicht ca. 220 g / mol) und 304 g eines Diglycidyläthers von Polypropylenglykol-600 (A1) werden auf 125 °C geheizt. Nach Zugabe von 1,5 g ®Shell Katalysator 1201 hält man solange bei 160 °C, bis ein Epoxid-Äquivalentgewicht von 760 bis 765 g/mol erreicht wird.

### 2.1 Erfindungsgemäße Dispersion

### nach Offenlegungsschrift DE 41 28 487

### Modifiziertes Basisharz, lösemittelhaltig

400 g des erfindungsgemäßen Harzes werden zusammen mit 39 g Methoxybutanol und 141 g einer 50 %igen wäßrigen Lösung eines Dispergiermittels B1, wie in DE-A 36 43 751 beschrieben, bei 80 °C homogenisiert. Nun wird das Harz mit 258 g Wasser D nach dem Verfahren dispergiert, wie es in DE-A 41 28 487 beschrieben wird.
Man erhält eine lagerstabile Dispersion, welche folgende Kennzahlen aufweist:

| | |
|---|---|
| Viskosität (25°C, Brookfield) | 1575 mPa^{·}s |
| Rückstand (1h, 1g, 125°C) | 56,3 % |
| Epoxidäquivalentgewicht (Lff.) | 1614 g/mol |
| Teilchengröße (monomodal) | 650 nm |
| Emulgatorgehalt | 15 % auf Festkörper |
| Lösemittelgehalt | 10 % auf Festkörper |

### 2.2 Erfindungsgemäße Dispersion

### nach DE-A 43 27 493

### Modifiziertes Basisharz, lösemittelfrei

401 g des erfindungsgemäßen Harzes werden zusammen mit 39,6 g einer Mischung aus Styrol, Methylmethacrylat und Glycidylmethacrylat (C1) (5:4:1) und 122 g einer 50 %igen wäßrigen Lösung eines Dispergiermittels B1, wie in DE-A 36 43 751 beschrieben, bei 80 °C homogenisiert. Nun wird das Harz mit 255 g Wasser D nach dem Verfahren dispergiert, wie es in DE-A 41 28 487 beschrieben wird. Zu der festkörperreichen Dispersion gibt man bei 60 °C 0,40 g tert.-Butylhydroperoxid und 0,045 g Eisen(II)-Sulfat als 2%-ige wäßrige Lösung. Darauf folgt die kontinuierliche Zugabe einer Lösung von 0,53 g Ascorbinsäure in 50 g Wasser während zwei Stunden. Nachdem der Ansatz noch eine Stunde bei 60 °C nachpolymerisierte, werden noch 35 g Wasser zugegeben.
Man erhält eine lagerstabile Dispersion, welche folgende Kennzahlen aufweist:

| | |
|---|---|
| Viskosität (25°C, Brookfield) | 2140 mPa^{·}s |
| Rückstand (1h, 1g, 125 °C) | 56,4 % |
| Epoxidäquivalentgewicht (Lff.) | 1644 g/mol |
| Teilchengröße (monomodal) | 540 nm |
| Emulgatorgehalt | 12 % auf Festkörper |
| Lösemittelgehalt | 0 % |

### 2.3 Vergleichsdispersion

### nach DE-A 41 28 487

### Unmodifiziertes Basisharz, lösemittelhaltig

144 g eines Polypropylenglykol-Diglycidyläthers mit einem Epoxidäquivalentgewicht von ca. 340 g/mol, 231 g Bisphenol A und 525 g eines Diglycidyläthers von Bisphenol A mit einem Epoxidäquivalentgewicht von 183 g/mol wurden gemäß Beispiel 1.2 zu einem Produkt mit einem Epoxidäquivalentgewicht von 729 g/mol umgesetzt. 900 g dieses Harzes werden mit 90 g Methoxybutanol gut verrührt. Danach gibt man 302 g Dispergiermittel (50 %ig in Wasser) nach DE-A 36 43 751 zu und dispergiert wie üblich.

Man erhält eine lagerstabile Dispersion, welche folgende Kennzahlen aufweist:

| | |
|---|---|
| Viskosität (25°C, Brookfield) | 1040 mPa ^{·} s |
| Rückstand (1h, 1g, 125°C) | 55,1 % |
| Epoxidäquivalentgewicht (Lff.) | 1463 g/mol |
| Teilchengröße (monomodal) | 589 nm |
| Emulgatorgehalt | 15 % auf Festkörper |
| Lösemittelgehalt | 10 % auf Festkörper |

### 2.4 Vergleichsdispersion

### nach DE-A 43 27 493

### Unmodifiziertes Basisharz, lösemittelfrei

286 g Basisharz nach Beispiel 2.3 werden mit 121g Dispergiermittel (50 %ig in Wasser) nach DE-A 36 43 751 und 57,2 g einer Mischung aus Styrol, Methylmethacrylat und Glycidylmethacrylat (5:4:1) homogenisiert und wie üblich dispergiert, wobei die Monomere wie in.Beispiel 2.2 polymerisiert werden.
Man erhält eine lagerstabile Dispersion, welche folgende Kennzahlen aufweist:

| | |
|---|---|
| Viskosität (25°C, Brookfield) | 1540 mPa^{·}s |
| Rückstand (1h, 1g, 125 °C) | 54,0 % |
| Epoxidäquivalentgewicht (Lff.) | 2361 g/mol |
| Teilchengröße (monomodal) | 465 nm |
| Emulgatorgehalt | 15 % auf Festkörper |
| Lösemittelgehalt | 0 % |

### Anwendungstechnische Eigenschaften

Die Dispersionen 2.1 bis 2.4 werden mit einem Äquivalent eines säurefunktionellen wasserverdünnbaren Härters ®Beckopox VEM 2436w gemischt, mit katalytischen Mengen Phosphorsäure versetzt und als Klarlack auf Weißblech aufgerakelt, Trockenfilmdicke 5 µm. Die Härtung erfolgt bei bei 200 °C während 12 Minuten.

Die Ausprüfung erfolgt als Standardausprüfung für Dosenlacke unter Berücksichtigung der Pasteurisationsfestigkeit.
Der Vergleich belegt, daß die Verträglichkeit der Harzkomponenten durch den Einsatz des "styrolisierten Epoxidharzes" erheblich verbessert wird. Eine lösemittelfreie Dispersion, welche durch das in der DE-A 43 27 493 beschriebene Verfahren gewonnen wurde, kann trotz hoher Styrol-Anteile im Polyacrylat in Kombination mit der vorliegenden Erfindung mit deutlich verbesserter Verträglichkeit erzeugt werden, wodurch die Herstellung völlig lösemittelfreier, pasteurisationsfester Getränkedosen-Innenlacke gelingt. Dabei kann sogar der Emulgatorgehalt verringert werden.

**Tabelle :**

| **Dispersion** | **2.1** | **2.2** | **2.3 (Vergleich)** | **2.4 (Vergleich)** |
|---|---|---|---|---|
| Anmerkungen | "styrolisiertes Basisharz" | "styrolisiertes Basisharz", mit Polyacrylat-Dispersion | unmodifiziertes Basisharz | unmodifiziertes Basisharz, mit Polyacrylat-Dispersion |
| Viskosität | 1575 mPas | 2140mPas | 1040 mPas | 1540 mPas |
| Festkörper | 56,3 % | 56,4 % | 55,1 % | 54,0 % |
| Epoxidäquivalentgewicht | 1614 g/mol | 1644 g/mol | 1463 g/mol | 2361 g/mol |
| Teilchengröße | 650 nm | 540 nm | 589 nm | 465 nm |
| Emulgatorgehalt | 15 % auf fest | 12 % auf fest | 15 % auf fest | 15 % auf fest |
| Lösemittelgehalt | 10 % auf fest | 0 % | 10 % | 0 % auf fest |
| Verlauf* | 0-1 | 0-1 | 0-1 | 3 (Trübung) |
| Doppelwischungen Aceton | 50 | 50 | 100 | 100 |
| Pasteurisation | 0-1 | 0-1 | 0-1 | 0-1 |

| | | | | |
|---|---|---|---|---|
| * Wertung: 0 = sehr gut bis 5 = sehr schlecht Pasteurisation: Wasser, 70 °C, eine Stunde | | | | |

## Patentansprüche

1. Stabile, wäßrige Epoxidharz-Dispersion enthaltend
(A) ein Epoxidharz, hergestellt durch Kondensation von
(A1) mindestens einer Epoxidverbindung mit durchschnittlich mindestens zwei Epoxidgruppen pro Molekül mit
(A2) einem modifizierten Polyphenol, gewonnen durch Umsetzung von
(A2a) Polyhydroxyaromaten mit
(A2b) Vinylverbindungen,
(B) ein Dispergiermittel enthaltend
(B1) ein Kondensationsprodukt aus
(B1a) einem Polyol und
(B1b) einer Epoxidverbindung mit durchschnittlich mindestens zwei Epoxidgruppen pro Molekül
und (D) Wasser.

2. Stabile, wäßrige Epoxidharz-Dispersion gemäß Anspruch 1, dadurch gekennzeichnet, daß die Dispersion zusätzlich ein Verdünnungsmittel (C) enthält, das aus einem oder mehreren der Stoffe besteht ausgewählt aus Additionspolymeren aus (C1) olefinisch ungesättigten radikalisch polymerisierbaren Monomeren, (C2) niedermolekularen flüssigen epoxyfunktionellen Verbindungen, und (C3) organischen Lösungsmitteln.

3. Stabile, wäßrige Epoxidharz-Dispersion gemäß Anspruch 2, dadurch gekennzeichnet, daß die olefinisch ungesättigten radikalisch polymerisierbaren Monomeren (C1) nach der Dispergierung des Epoxidharzes in Wasser durch Zusatz eines oder mehrerer radikalischer Initiatoren polymerisiert werden.

4. Stabile, wäßrige Epoxidharz-Dispersion gemäß Anspruch 1, 2 oder 3, dadurch gekennzeichnet, daß zur Synthese des Epoxidharzes eine Komponente (A1) eingesetzt wird mit einem Epoxidäquivalentgewicht von 100 bis 2000 g/mol.

5. Stabile, wäßrige Epoxidharz-Dispersion gemäß Anspruch 1, 2 oder 3, dadurch gekennzeichnet, daß das Dispergiermittel (B) ein Kondensationsprodukt (B1) aus
einem Polyol (B1a) mit einer gewichtsmittleren Molmasse (Mw) von 200 bis 20000 g/mol und
einer Epoxidverbindung (B1b) mit durchschnittlich mindestens zwei Epoxidgruppen pro Molekül und einem Epoxidäquivalentgewicht von 100 bis 2000 g/mol enthält.

6. Stabile, wäßrige Epoxidharz-Dispersion gemäß Anspruch 5, dadurch gekennzeichnet, daß
das Dispergiermittel (B) zusätzlich mindestens ein Tensid (B2) enthält.

7. Stabile, wäßrige Epoxidharz-Dispersion gemäß Anspruch 3, dadurch gekennzeichnet, daß das Massenverhältnis von Epoxidharz (A) zu dem aus den Monomeren (C1) gebildeten Additionspolymeren zwischen 99,5 zu 0,5 bis 20 zu 80 beträgt.

8. Verfahren zur Herstellung von stabilen wäßrigen Epoxidharz-Dispersionen gemäß Anspruch 2, dadurch gekennzeichnet, daß im ersten Schritt aus der Epoxidverbindung (A1) und dem modifizierten Polyphenol (A2) ein modifiziertes Epoxidharz (A) hergestellt wird, und im zweiten Schritt das modifizierte Epoxidharz (A) unter Zusatz eines Emulgators (B) und mindestens eines olefinisch ungesättigten Monomeren (C1) in Wasser dispergiert wird, und danach nach Zufügen eines radikalbildenden Initiators polymerisiert wird.

9. Verfahren nach Anspruch 8, dadurch gekennzeichnet, daß zusätzlich zu den Monomeren (C1) mindestens ein Stoff ausgewählt aus niedermolekularen flüssigen Epoxidverbindungen (C2) und organischen inerten Lösungsmitteln (C3) gemeinsam mit, vor oder nach Zusatz des Monomeren (C1) zugefügt wird.

10. Verwendung der Dispersionen nach Anspruch 1 zur Beschichtung von Gegenständen.

11. Beschichtungen, hergestellt durch Auftragen der Epoxidharz-Dispersionen gemäß Anspruch 1 auf Gegenstände und nachfolgende Härtung.

12. Verwendung der Dispersionen nach Anspruch 1 als Klebstoff.

## Claims

1. A stable, aqueous epoxy resin dispersion comprising
(A) an epoxy resin prepared by condensation of
(A1) at least one epoxide compound having on average at least two epoxide groups per molecule, with
(A2) a modified polyphenol obtained by reacting
(A2a) polyhydroxy aromatic compounds with
(A2b) vinyl compounds,
(B) a dispersant comprising
(B1) a condensation product of
(B1a) a polyol and
(B1b) an epoxide compound having on average at least two epoxide groups per molecule
and (D) water.

2. A stable, aqueous epoxy resin dispersion as claimed in claim 1, wherein the dispersion additionally comprises a diluent (C) which consists of one or more substances selected from addition polymers of (C1) olefinically unsaturated monomers which can be polymerized by free-radical polymerization, (C2) low molecular weight, liquid, epoxy-functional compounds, and (C3) organic solvents.

3. A stable, aqueous epoxy resin dispersion as claimed in claim 2, wherein the olefinically unsaturated monomers (C1) which can be polymerized by free-radical polymerization are polymerized, following the dispersion of the epoxy resin in water, by addition of one or more free-radical initiators.

4. A stable, aqueous epoxy resin dispersion as claimed in claim 1, 2 or 3, wherein for the synthesis of the epoxy resin a component (A1) is employed which has an epoxide equivalent weight of from 100 to 2000 g/mol.

5. A stable, aqueous epoxy resin dispersion as claimed in claim 1, 2 or 3, wherein the dispersant (B) comprises a condensation product (B1) of
a polyol (B1a) having a weight-average molecular mass (M_{w}) of from 200 to 20,000 g/mol and
an epoxide compound (Blb) having on average at least two epoxide groups per molecule and an epoxide equivalent weight of from 100 to 2000 g/mol.

6. A stable, aqueous epoxy resin dispersion as claimed in claim 5, wherein
the dispersant (B) additionally comprises at least one surfactant (B2).

7. A stable, aqueous epoxy resin dispersion as claimed in claim 3, wherein the ratio by mass of epoxy resin (A) to the addition polymer formed from the monomers (C1) is from 99.5:0.5 to 20:80.

8. A process for the preparation of a stable aqueous epoxy resin dispersion as claimed in claim 2, which comprises, in a first step, preparing a modified epoxy resin (A) from the epoxide compound (A1) and the modified polyphenol (A2), and, in a second step, dispersing the modified epoxy resin (A) in water with the addition of an emulsifier (B) and of at least one olefinically unsaturated monomer (C1), and then carrying out polymerization following the addition of a radical-forming initiator.

9. The process as claimed in claim 8, wherein in addition to the monomers (C1) at least one substance selected from low molecular weight, liquid epoxide compounds (C2) and inert organic solvents (C3) is added conjointly with, prior to or following the addition of the monomer (C1).

10. The use of a dispersion as claimed in claim 1 for the coating of articles.

11. A coating produced by applying an epoxy resin dispersion as claimed in claim 1 to an article followed by curing.

12. The use of a dispersion as claimed in claim 1 as an adhesive.

## Revendications

1. Dispersion aqueuse stable de résine époxyde contenant
(A) une résine époxyde, préparée par condensation de
(A1) au moins un composé époxyde avec en moyenne au moins deux groupes époxyde par molécule avec
(A2) un polyphénol modifié, obtenu par réaction de
(A2a) composés polyhydroxyaromatiques avec
(A2b) des dérivés du vinyle,
(B) un agent dispersant contenant
(B1) d'un produit de condensation de
(B1a) un polyol et
(B1b) un composé époxyde avec en moyenne deux groupes époxyde par molécule
et (D) de l'eau.

2. Dispersion aqueuse stable de résine époxyde selon la revendication 1, caractérisée en ce que la dispersion contient de plus un agent de dilution (C), qui est constitué d'une ou de plusieurs des matières choisies parmi des polymères d'addition (C1) de monomères oléfiniquement insaturés polymérisables par polymérisation radicalaire, (C2) des composés liquides de bas poids moléculaires à fonctionnalité époxy, et (C3) des solvants organiques.

3. Dispersion aqueuse stable de résine époxyde selon la revendication 2, caractérisée en ce que les monomères (C1) oléfiniquement insaturés polymérisables par polymérisation radicalaire sont polymérisés après la dispersion de la résine époxyde dans l'eau par addition d'un ou de plusieurs initiateurs de radicaux.

4. Dispersion aqueuse stable de résine époxyde selon la revendication 1, 2 ou 3, caractérisée en ce qu'on utilise pour la synthèse de la résine époxyde un constituant (A1) avec une masse équivalente d'époxyde de 100 à 2000 g/mol.

5. Dispersion aqueuse stable de résine époxyde selon la revendication 1, 2 ou 3, caractérisée en ce que l'agent dispersant (B) contient un produit de condensation (B1) constitué
d'un polyol (B1a) avec une masse molaire moyenne en masse (Mw) de 200 à 20000 g/mol et
d'un composé époxyde (B1b) avec en moyenne deux groupes époxyde par molécule et une masse équivalente en époxyde de 100 à 2000 g/mol.

6. Dispersion aqueuse stable de résine époxyde, selon la revendication 5, caractérisée en ce que
l'agent dispersant (B) contient de plus au moins un agent tensioactif (B2).

7. Dispersion aqueuse stable de résine époxyde, selon la revendication 3, caractérisée en ce que le rapport en masse de résine époxyde (A) au polymère d'addition formé à partir des monomères (C1) est entre 99,5 sur 0,5 et 20 sur 80.

8. Procédé de préparation de dispersions aqueuses stables de résine époxyde selon la revendication 2, caractérisé en ce qu'on prépare dans une première étape une résine époxyde modifiée (A1) à partir du composé époxyde (A1) et du polyphénol modifié (A2), et en ce que dans une deuxième étape on disperse dans l'eau la résine époxyde modifiée (A) par addition d'un agent émulsionnant (B) et d'au moins un monomère oléfiniquement insaturé (C1), et en ce qu'ensuite on polymérise après ajout d'un initiateur produisant des radicaux libres.

9. Procédé selon la revendication 8, caractérisé en ce qu'on ajoute aux monomères (C1) au moins une matière choisie parmi les composés époxyde liquides de bas poids moléculaire (C2) et les solvants organiques inertes (C3) en même temps avec, avant ou après l'addition du monomère (C1).

10. Utilisation des dispersions selon la revendication 1 pour le revêtement d'objets.

11. Revêtements, préparés par dépôt des dispersions de résine époxyde selon la revendication 1 sur des objets et durcissement ensuite.

12. Utilisation des dispersions selon la revendication 1 comme colle.
